# EUROPÄISCHE PATENTANMELDUNG

(11) **EP 2 523 299 A1**
(43) Veröffentlichungstag der Anmeldung: **14.11.2012**
(21) Anmeldenummer: 11165956.1
(22) Anmeldetag: 13.05.2011
(51) Int. Cl.: H02J 3/38, H02M 7/48

(54) **Photovoltaikanlage**

(71) Anmelder: Siemens Aktiengesellschaft, 80333 München (DE)
(72) Erfinder: Geisler, Stephan, 09439, Weißbach (DE); Weiss, Jörg, 09224, Chemnitz (DE)

(57) **Zusammenfassung**

Erfindungsgemäß wird eine Photovoltaikanlage (1) mit einem Photovoltaikfeld (2) und mit mindesten zwei Wechselrichtern (3) zur Stromeinspeisung in ein Wechselstromnetz vorgeschlagen. Dabei sind die Gleichspannungseingänge von mindestens zwei Wechselrichtern (3) in Reihe geschaltet.

## Beschreibung

Derartige Photovoltaikanlagen sind aus der Praxis bekannt. Hierbei sind mehrere Photovoltaikmodule durch Reihen- und Parallelschaltung zu jeweils einem Photovoltaikfeld zusammengefasst. Jedes Photovoltaikfeld ist mit einem gesonderten Wechselrichter zur Stromeinspeisung in ein Wechselstromnetz verbunden.

Die Isolationsfestigkeit von Photovoltaikmodulen konnte in den letzten Jahren immer mehr gesteigert werden, was erhebliche Kostenvorteile mit sich bringt. Heutzutage ist die Auslegung leistungsstarker Photovoltaikanlagen mit einer Gleichspannung von 1.000V und mehr möglich, und es werden bereits 1.500V als Gleichspannung angestrebt. Die höchsten Spannungen treten bei niedrigen Temperaturen als Leerlaufspannung auf. Diese hohen Spannungen muss der Wechselrichter einerseits sperren können, andererseits muss ein Anlaufen bei diesen hohen Gleichspannungen möglich sein. Dabei sinkt die Spannung bedingt durch die Kennlinie der Photovoltaikmodule ab.

Für diese Betriebsbedingungen stehen keine geeigneten Wechselrichter zur Verfügung. Bei Wechselrichtern für das 400/480V-Netz ist die zulässige Zwischenkreisspannung üblicherweise auf ca. 800V Gleichspannung begrenzt, bedingt durch den Einsatz von Kondensatoren mit 400V oder 500V Nennspannung, von denen zur Einhaltung der Isolationsfestigkeit zwei in Reihe geschaltet werden.

Weiterhin werden für Antriebswechselrichter in diesem Spannungsbereich in der Regel IGBTs (Insulated-gate bipolar transistor) mit einer Sperrspannung von 1.200V eingesetzt. Ein getakteter Betrieb eines solchen Wechselrichters ist wegen der auftretenden Schaltverlustleistung und der Überspannungen bedingt durch Streuinduktivitäten bis zu Zwischenkreisspannungen von höchstens 1.000V möglich und das auch nur mit einer erheblichen Herabsetzung des Stroms.

Wechselrichter für Betrieb am 690V-Wechselspannungsnetz sind bis zu einer Gleichspannung von ca. 1.200V einsetzbar, erfüllen also die Forderung nach Gleichspannungen bis 1.500V ebenfalls nicht. Die eingesetzten 1.700V-IGBTs sind zudem deutlich teurer als 1.200V-Typen. Bedingt durch die relativ niedrige Mindestgleichspannung ergibt sich außerdem eine deutliche Herabsetzung der Nennleistung, verglichen mit einem Antrieb bei gleicher Stromstärke.

Der Erfindung liegt daher die Aufgabe zugrunde, eine Photovoltaikanlage der oben genannten Art vorzuschlagen, die die Stromeinspeisung in das Wechselstromnetz bei hoher Gleichspannung auf einfache Weise ermöglicht.

Die Aufgabe wird mit den Merkmalen nach Anspruch 1 gelöst. Die Photovoltaikanlage weist ein Photovoltaikfeld und mindestens zwei Wechselrichter zur Stromeinspeisung in ein Wechselstromnetz auf, wobei die Gleichspannungseingänge von mindestens zwei Wechselrichtern in Reihe geschaltet sind.

Eine vorteilhafte Weiterbildung der Photovoltaikanlage besteht, wenn gemäß Anspruch 2 für die Stromeinspeisung in das Wechselstromnetz ein Transformator mit zwei Primärwicklungen und einer Sekundärwicklung eingesetzt ist, wobei die Primärwicklungen jeweils mit einem Wechselstromanschluss eines Wechselrichters verbunden sind.

Weiterhin ist es vorteilhaft, wenn gemäß Anspruch 3 eine Überbrückungseinrichtung vorgesehen ist, mit der einer der Wechselrichter überbrückbar ist. Dies ermöglicht einen Betrieb bei Teillast, d.h. bei niedriger Gleichspannung infolge geringer Sonneneinstrahlung mit hohem Wirkungsgrad.

Ein Ausführungsbeispiel der Erfindung wird im Folgenden anhand einer Zeichnung näher erläutert.

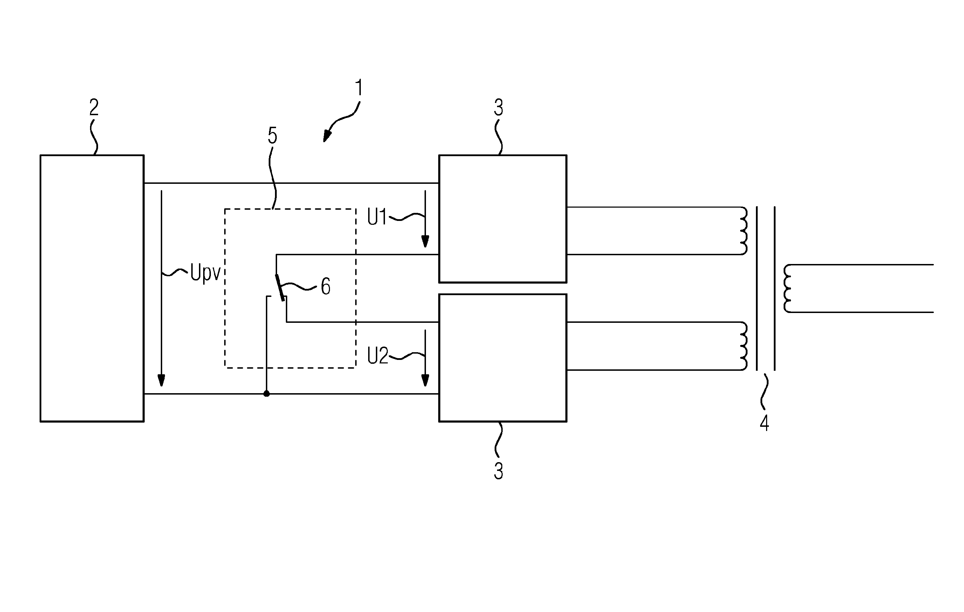

In der Zeichnung ist eine erfindungsgemäße Photovoltaikanlage 1 mit einem Photovoltaikfeld 2, zwei Wechselrichtern 3 und einem Netztransformator 4 dargestellt. Das Photovoltaikfeld 2 umfasst mehrere hier nicht näher dargestellte Photovoltaikmodule und stellt an seinen Ausgangsklemmen eine Gleichspannung Upv zur Verfügung. Die Gleichspannungseingänge der beiden Wechselrichter 3 sind in Reihe geschaltet. An ihnen teilt sich die Gleichspannung Upv in die Spannung U1 am ersten Wechselrichter 3 und die Spannung U2 am zweiten Wechselrichter 3 auf. Die Stromeinspeisung in das Wechselstromnetz erfolgt über den Netztransformator 4, der hier zwei gekoppelte Primärwicklungen und eine Sekundärwicklung aufweist. An jede Primärwicklung ist jeweils ein Wechselrichter 3 wechselstromseitig angeschlossen. Eine Überbrückungseinrichtung 5 mit einem Schalter 6 ermöglicht es, einen der beiden Wechselrichter 3 zu überbrücken.

Da die zulässige Zwischenkreisspannung üblicherweise auf ca. 800V begrenzt ist, wäre mit der Reihenschaltung der Gleichspannungseingänge der beiden Wechselrichter 3 theoretisch ein Betrieb mit einer maximalen Gleichspannung von 1.600V möglich. Die Betriebsführung muss dabei so erfolgen, dass sich die Gleichspannung auf die beiden Zwischenkreise der Wechselrichter 3 symmetrisch aufteilt.

Durch die Überbrückung eines der Wechselrichter 3 mit der Überbrückungseinrichtung 5 ist der Betrieb bei Teillast mit einem besseren Wirkungsgrad möglich. Dabei muss sichergestellt werden, dass der Zwischenkreis des überbrückten Wechselrichters 3 nicht kurzgeschlossen wird, was über einen Wechsler und eine Diode erreicht werden kann. In der Praxis ist beim Wiederzuschalten des zweiten Wechselrichters 3 im laufenden Betrieb der Anlage außerdem eine Vorladeeinrichtung für das Laden der Zwischenkreiskondensatoren nötig.

Da über den Netztransformator 4 eine Entkopplung vom öffentlichen Netz erfolgt, bieten sich verschiedene Möglichkeiten der Erdung im Zwischenkreis an, nämlich des Pluspols, des Minuspols oder des Mittelpunkts.

Mit der erfindungsgemäßen Photovoltaikanlage werden folgende Vorteile erzielt:
- Verwendung von eingeführten Hauptkomponenten möglich,
- Vermeidung von aufwändigen Anlaufschaltungen,
- Erhöhung der Zuverlässigkeit, da die maximale Gleichspannung von den Hauptkomponenten ohne weiteres ausgehalten wird,
- kein zusätzlicher Gleichspannungssteller erforderlich und damit Vermeidung von Verlusten.

## Patentansprüche

1. Photovoltaikanlage (1) mit einem Photovoltaikfeld (2) und mit mindestens zwei Wechselrichtern (3) zur Stromeinspeisung in ein Wechselstromnetz, wobei die Gleichspannungseingänge von mindestens zwei Wechselrichtern (3) in Reihe geschaltet sind.

2. Photovoltaikanlage nach Anspruch 1, **dadurch gekennzeichnet, dass** für die Stromeinspeisung in das Wechselstromnetz ein Netztransformator (4) mit zwei Primärwicklungen und einer Sekundärwicklung eingesetzt ist, wobei die Primärwicklungen jeweils mit einem Wechselstromanschluss eines der in Reihe geschalteten Wechselrichter (3) verbunden sind.

3. Photovoltaikanlage nach Anspruch 1 oder 2, **dadurch gekennzeichnet, dass** eine Überbrückungseinrichtung (5) vorgesehen ist, mit der zumindest einer der Wechselrichter (3) überbrückbar ist.
